(19) Europäisches Patentamt
European Patent Office
Office européen des brevets

(11) **EP 4 692 766 A1**

(12) **EUROPEAN PATENT APPLICATION**
published in accordance with Art. 153(4) EPC

(43) Date of publication:
**11.02.2026 Bulletin 2026/07**

(21) Application number: **24776818.7**

(22) Date of filing: **26.02.2024**

(51) International Patent Classification (IPC):
***G01N 21/64*** (2006.01)     ***G01J 3/443*** (2006.01)

(52) Cooperative Patent Classification (CPC):
**G01J 3/443; G01N 21/64**

(86) International application number:
**PCT/JP2024/006818**

(87) International publication number:
**WO 2024/202794 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023055642**

(71) Applicant: **HITACHI HIGH-TECH CORPORATION Tokyo 105-6409 (JP)**

(72) Inventors:
• **HAYASHIDA Junya**
  **Tokyo 100-8280 (JP)**
• **KAKISHITA Yasuki**
  **Tokyo 100-8280 (JP)**
• **HATTORI Hideharu**
  **Tokyo 100-8280 (JP)**
• **HORIGOME Jun**
  **Tokyo 105-6409 (JP)**

(74) Representative: **Strehl & Partner mbB**
  **Maximilianstrasse 54**
  **80538 München (DE)**

(54) **SPECTRUM ANALYSIS DEVICE, SPECTRUM ANALYSIS SYSTEM, AND SPECTRUM ANALYSIS METHOD**

(57)     A spectrum analysis device for quantifying/identifying a characteristic of a sample based on spectrum data of the sample at one or a plurality of excitation wavelengths is disclosed. The spectrum analysis device includes an arithmetic device and a memory configured to store a program to be executed by the arithmetic device. The arithmetic device receives the spectrum data obtained from the sample as an input, acquires wavelength selection information that indicates a contribution to quantification/identification and/or necessary/unnecessary for each wavelength band of the spectrum data, selects a wavelength band used for quantifying/identifying the characteristic of the sample from the wavelength band of the spectrum data based on the wavelength selection information, and performs quantification/identification of the characteristic of the sample based on a detection intensity corresponding to a selection result of the wavelength band, and outputs a result.

[FIG. 2]

## Description

Cross-Reference to Related Application

The present application claims the priority of Japanese Patent Application No. 2023-055642, filed on March 30, 2023, the entire contents of which are incorporated herein by reference.

Technical Field

The present invention relates to spectrum analysis.

Background Art

In a spectrum analysis device, a sample is irradiated with a dispersed excitation light and a light detected from the sample is measured to obtain a spectrum. For example, a fluorescence spectrophotometer measures a three-dimensional fluorescence spectrum called a fluorescence fingerprint. When the sample is irradiated with an excitation light having a specific wavelength, the excited sample emits fluorescence having various wavelengths. This is called a fluorescence spectrum, and an intensity of fluorescence at each fluorescence wavelength is called a fluorescence intensity.

The sample emits different fluorescence spectra when the wavelength of the excitation light is changed. Therefore, by measuring the fluorescence spectrum while sequentially changing the wavelength of the excitation light, a three-dimensional spectrum is obtained with three axes: an excitation wavelength, a fluorescence wavelength, and a fluorescence intensity. A detection wavelength corresponds to the fluorescence wavelength, and a detection intensity corresponds to the fluorescence intensity. By analyzing a shape of the obtained three-dimensional spectrum, it is possible to quantify components contained in the sample and identify a type thereof.

As a spectrum data analysis method in the related art, for example, there is a method of performing multivariate analysis using each detection intensity in a spectrum as an independent variable.

PTL 1 discloses a method of estimating a content of a target substance while limiting an excitation wavelength used for estimation by performing sparse estimation on spectrum data with a light absorption characteristic value (detection intensity) at each of a plurality of excitation wavelengths as an independent variable.

PTL 2 discloses a method of providing a rectangular measurement window for a fluorescence fingerprint and performing multivariate analysis using an integrated value of fluorescence intensity in the measurement window.

Citation List

Patent Literature

PTL 1: JP2018-013418A
PTL 2: JP2015-180895A

Summary of Invention

Technical Problem

The technique described in PTL 1 automatically limits a wavelength band used for quantification/identification by performing the sparse estimation using all detection intensities in spectrum data as the independent variable. However, when the sparse estimation or multivariate analysis is performed using detection intensities in all wavelength bands in a spectrum as the independent variable, as in the technique described in PTL 1, depending on a situation of a noise component in training data, a quantification/identification model may be constructed that focuses on the noise component that does not actually contribute to the quantification/identification, and performance of the quantification/identification model is significantly reduced. If an expert manually selects a wavelength band so as not to use such a wavelength band for the quantification/identification, specialized knowledge is required, and thus an increase in an analysis time becomes a problem.

In the technique described in PTL 2, the rectangular measurement window is provided, and the multivariate analysis is performed using the integrated value of fluorescence intensity in the measurement window. This limits a wavelength band used for quantification/identification. However, it is necessary to manually design the measurement window or search for the measurement window by constructing a regression formula based on a fluorescence intensity in a randomly set measurement window and repeatedly performing processing of resetting the measurement window based on a quantification/identification result. Specialized knowledge is required to determine a wavelength band effective for the quantification/identification of an analyte, and when a trial is randomly performed, a wavelength band including a noise component in training data may be selected depending on a situation of the noise component.

In view of the above problems, an object of the invention is to provide a spectrum analysis device that estimates wavelength selection information, which is information for selecting a wavelength band effective for quantification/identification, and has an automatic wavelength selection function based on the wavelength selection information, thereby performing highly accurate quantification/identification with a shortened time required for wavelength selection without using specialized knowledge.

Solution to Problem

According to one aspect of the invention, there is provided a spectrum analysis device for quantifying/identifying a characteristic of a sample based on spectrum data of the sample at one or a plurality of excitation wavelengths. The spectrum analysis device includes: an arithmetic device; and a memory configured to store a program to be executed by the arithmetic device. The arithmetic device receives one or more pieces of spectrum data obtained from one or more samples as an input, acquires wavelength selection information that indicates a contribution to quantification/identification and/or necessary/unnecessary for each wavelength band of the spectrum data, selects a wavelength band used for quantifying/identifying the characteristic of the sample from the wavelength band of the spectrum data based on the wavelength selection information, and performs quantification/identification of the characteristic of the sample based on a detection intensity corresponding to a selection result of the wavelength band, and outputs a result.

Advantageous Effects of Invention

According to the one aspect of the invention, it is possible to perform spectrum analysis that performs highly accurate quantification/identification with a shortened time.

Brief Description of Drawings

[FIG. 1] FIG. 1 is a diagram illustrating an example of a hardware structure of a spectrum analysis device according to Embodiment 1.
[FIG. 2] FIG. 2 is a diagram illustrating an example of a functional block diagram of the spectrum analysis device according to Embodiment 1.
[FIG. 3A] FIG. 3A illustrates an example of spectrum data.
[FIG. 3B] FIG. 3B illustrates an example of the spectrum data.
[FIG. 4A] FIG. 4A illustrates an example of wavelength selection information.
[FIG. 4B] FIG. 4B illustrates an example of the wavelength selection information.
[FIG. 5] FIG. 5 illustrates an example of a wavelength selection result.
[FIG. 6] FIG. 6 is a diagram illustrating an example of a processing flow of a spectrum analysis method according to Embodiment 1.
[FIG. 7] FIG. 7 is a diagram illustrating an example of a functional block diagram of a spectrum analysis device according to Embodiment 2.
[FIG. 8] FIG. 8 is a diagram illustrating an example of a graph representing a relationship between the number of wavelength bands selected by automatic wavelength selection and quantification/identification accuracy.
[FIG. 9] FIG. 9 is a diagram illustrating an example of a processing flow of a spectrum analysis method according to Embodiment 2.
[FIG. 10] FIG. 10 is a diagram illustrating an example of a hardware structure of a spectrum analysis system according to Embodiment 3.

Description of Embodiments

Hereinafter, embodiments of a spectrum analysis method, device, and system according to the invention will be described with reference to the accompanying drawings. In the following description and the accompanying drawings, components having the same functional configuration are denoted by the same reference signs, and redundant description thereof will be omitted.

[Embodiment 1]

<Hardware Structure of Spectrum Analysis Device>

In Embodiment 1, a spectrum analysis device will be described that estimates wavelength selection information, which is information for selecting a wavelength band effective for quantification/identification (quantification or identification), and has an automatic wavelength selection function of automatically selecting a wavelength band to be used for the quantification/identification based on the wavelength selection information, thereby shortening an analysis time and achieving highly accurate quantification/identification without using specialized knowledge. The quantification estimates quantity, and the identification estimates a class.

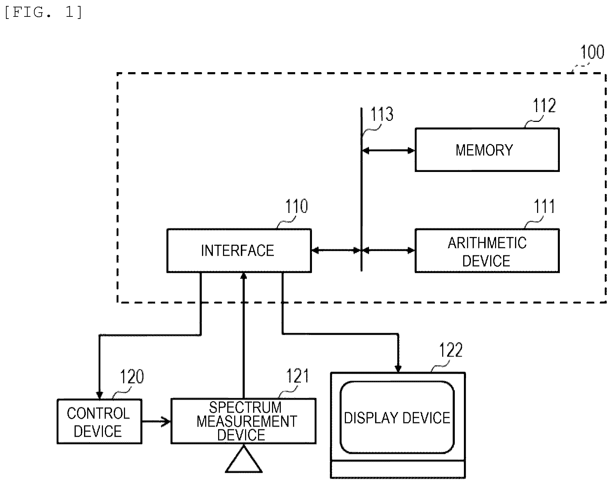

A hardware structure of the spectrum analysis device according to Embodiment 1 will be described with reference to FIG. 1. A spectrum analysis device 100 includes an interface 110, an arithmetic device 111, a memory 112, and a bus 113, and the interface 110, the arithmetic device 111, and the memory 112 transmit and receive information via the bus 113.

Units of the spectrum analysis device 100 will be described. The interface 110 is a communication device that transmits and receives signals to and from a device outside the spectrum analysis device 100 via a network. The devices that perform transmission and reception with the interface 110 include a control device 120 that controls a spectrum measurement device 121, the spectrum measurement device 121 that measures three-dimensional spectrum data, and a display device 122 such as a monitor or a printer that displays a processing result of the spectrum analysis device 100.

A method of transmitting and receiving a signal to and from an external device may be a wired connection using a cable such as an optical fiber, or may be a wireless connection using a wireless communication technique such as Bluetooth. The spectrum analysis device 100 does not necessarily have to be installed in the same facility as the control device 120, the spectrum measurement device 121, and the display device 122, and may be installed and mounted in another computer or inside a cloud. In such a case, signals are transmitted and received between the interface 110 and the external device via a connection such as a local area network (LAN) or a wide area network (WAN).

The arithmetic device 111 is a device that executes various types of processing in the spectrum analysis device 100, and is, for example, a central processing unit (CPU) or a field-programmable gate array (FPGA). Functions executed by the arithmetic device 111 will be described later.

The memory 112 is a device that stores programs to be executed by the arithmetic device 111, parameters of quantification/identification models, processing results, or the like, and is an HDD, SSD, RAM, ROM, flash memory, or the like.

<Functional Configuration of Spectrum Analysis Device 100>

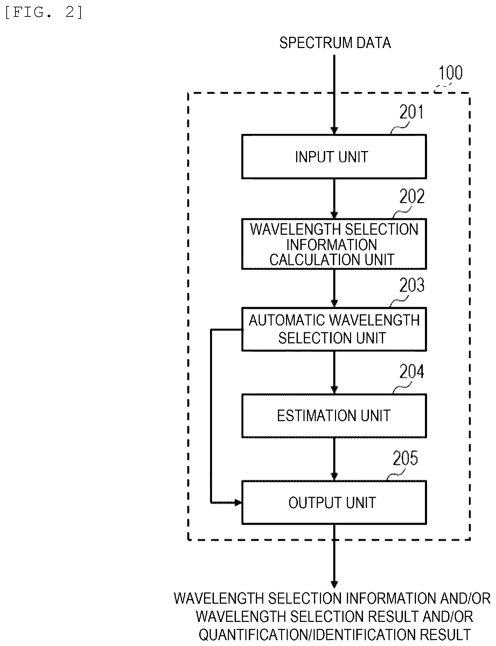

FIG. 2 is an example of a functional block diagram of the spectrum analysis device 100 according to the embodiment. Each of these functional units may be implemented by the arithmetic device 111 that executes a predetermined program or may be implemented by dedicated hardware.

The spectrum analysis device 100 includes, as the functional units, an input unit 201, a wavelength selection information calculation unit 202, an automatic wavelength selection unit 203, an estimation unit 204, and an output unit 205. Hereinafter, each functional unit will be described.

The input unit 201 receives one or more pieces of discretized spectrum data input from the interface 110.

The wavelength selection information calculation unit 202 reads a wavelength selection information calculation model stored in the memory 112, calculates wavelength selection information based on the input spectrum data, or acquires the wavelength selection information stored in the memory 112. Alternatively, the wavelength selection information may be calculated by integrating the wavelength selection information calculated based on the input spectrum data and the wavelength selection information stored in the memory 112.

The automatic wavelength selection unit 203 automatically selects a wavelength band to be used for quantification/identification based on the wavelength selection information, and outputs a selection result as a wavelength selection result.

The estimation unit 204 reads one of the quantification/identification models stored in the memory 112, and performs quantification/identification based on the spectrum data based on the wavelength selection result obtained by the automatic wavelength selection unit 203.

The output unit 205 outputs at least one of the wavelength selection information, the wavelength selection result, and a quantification/identification result.

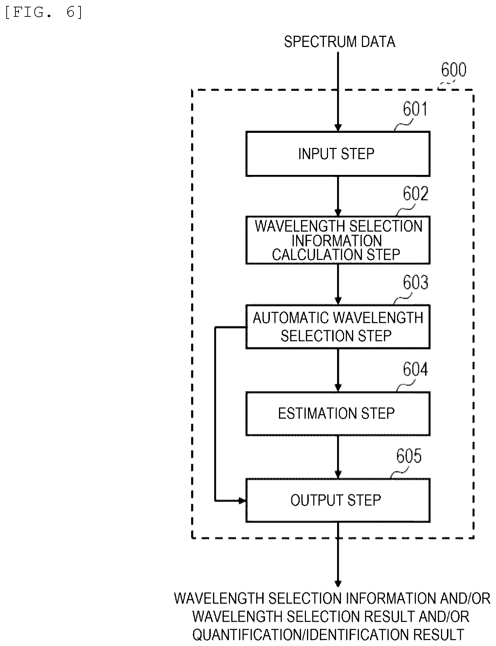

The functions described above do not need to be implemented as in the functional units in FIG. 2 as long as processing that corresponds to an operation of each functional block can be implemented. FIG. 6 illustrates an example of a processing flow diagram according to Embodiment 1. Steps correspond to elements of the functional block diagram illustrated in FIG. 2.

In an input step 601, one or more pieces of discretized spectrum data input from the interface 110 are received.

In a wavelength selection information calculation step 602, a wavelength selection information calculation model stored in the memory 112 is read, and wavelength selection information is calculated based on the input spectrum data, or wavelength selection information stored in the memory 112 is acquired. Alternatively, the wavelength selection information may be calculated by integrating the wavelength selection information calculated based on the input spectrum data and the wavelength selection information stored in the memory 112.

In an automatic wavelength selection step 603, a wavelength band to be used for the quantification/identification is automatically selected based on the wavelength selection information, and a selection result is output as a wavelength selection result.

In an estimation step 604, one of the quantification/identification models stored in the memory 112 is read, and quantification/identification is performed based on the spectrum data based on the wavelength selection result obtained in the automatic wavelength selection step 603.

In an output step 605, at least one of the wavelength selection information, the selection result, and the quantification/identification result is output.

Hereinafter, a detailed operation will be described with each functional unit as a subject, but each step corresponding to the functional unit may be interpreted as the subject.

<Configuration and Operation of Each Unit>

Hereinafter, operations of the input unit 201, the wavelength selection information calculation unit 202, the automatic wavelength selection unit 203, and the estimation unit 204 among the functional units will be described in detail.

The input unit 201 receives one or more pieces of discretized spectrum data via the interface 110. The spectrum data refers to one-dimensional data having one type of wavelength band and detection intensity as axes, or multidimensional data having two or more types of wavelength bands and detection intensities as axes. The spectrum data received by the input unit is output to the wavelength selection information calculation unit 202, or the spectrum data is output to the wavelength selection information calculation unit 202 while being stored in the memory 112.

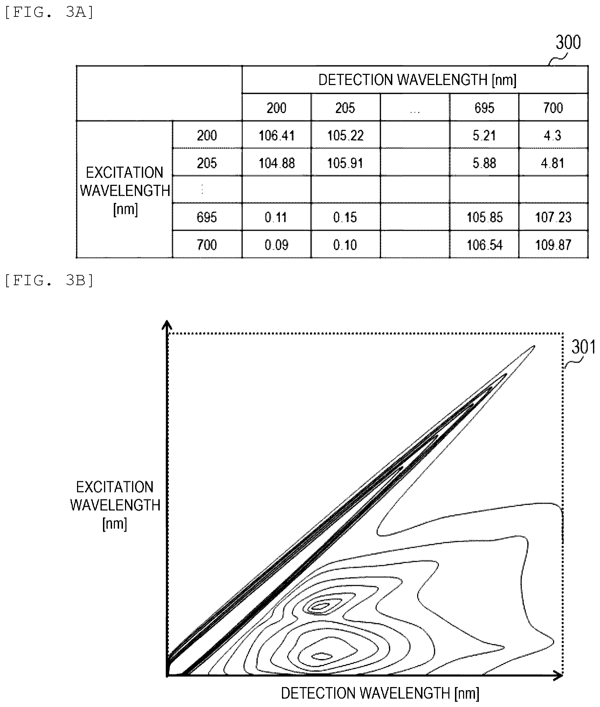

FIG. 3A illustrates fluorescence fingerprint data as an example of the spectrum data. Discretized fluorescence fingerprint data 300 is an example of the fluorescence fingerprint data that is discretized and stored. FIG. 3B illustrates a fluorescence fingerprint data visualization example 301. The fluorescence fingerprint data visualization example 301 is an example in which a vertical axis represents an excitation light wavelength and a horizontal axis represents a detection wavelength, and a detection intensity for each combination of excitation and detection wavelengths is displayed as contour line data.

As illustrated in the discretized fluorescence fingerprint data 300, the fluorescence fingerprint data is discretized and measured and recorded. The discretized fluorescence fingerprint data 300 illustrates an example in which an excitation light/detection light is measured at intervals of 5 nm from 200 nm to 700 nm, and for example, in a first row and first column of the discretized fluorescence fingerprint data 300, a detection intensity of a detection light of 200 nm with respect to an excitation light of 200 nm is recorded, in the first row and a second column, a detection intensity of a detection light of 205 nm with respect to the excitation light of 200 nm is recorded, and in a second row and the first column, a detection intensity of a detection light of 200 nm with respect to an excitation light of 205 nm is recorded. The number of columns and the number of rows of the discretized fluorescence fingerprint data 300 are $100 \times 100$ because 500 nm is recorded at intervals of 5 nm.

The fluorescence fingerprint data visualization example 301 is an example in which the discretized fluorescence fingerprint data 300 is converted into a two-dimensional image as contour line data, and when a human observes fluorescence fingerprint data, the fluorescence fingerprint data is often checked in a display as in the fluorescence fingerprint data visualization example 301. In addition to the contour line data, the data may be displayed as a gray image or heat map image in which the detection intensity is assigned to a luminance value or color, or as a bird's-eye view. A shape of the fluorescence fingerprint varies depending on properties of the sample to be measured, and identification of the sample, quantification of a specific component, and the like are performed based on a difference in shape.

In the fluorescence fingerprint data visualization example 301, the fluorescence fingerprint data includes a noise component that does not contribute to the quantification/identification. For example, a wavelength band including Rayleigh scattering is generally regarded as a noise component in the quantification/identification using a fluorescence fingerprint. The Rayleigh scattering is not fluorescence emitted from the sample but light reflected from the sample, and by detecting the Rayleigh scattering, a feature irrelevant to a characteristic of the sample is reflected in the fluorescence fingerprint.

For example, a method of automatically limiting a wavelength band used for quantification/identification by performing sparse estimation using all detection intensities in spectrum data as independent variables is conceivable. However, when the analysis is performed on the spectrum data that includes Rayleigh scattering, quantification/identification accuracy may decrease.

For example, if a pattern of Rayleigh scattering happens to be correlated with a target value for quantification/identification of training data due to an influence of a measurement environment or the like, when a quantification/identification model is constructed with a detection intensity of Rayleigh scattering included as the independent variable, a quantification/identification model focusing on the pattern of Rayleigh scattering may be constructed, even though the feature is not actually related to the characteristic of the sample. In order to avoid this, an expert selects a wavelength in advance so as not to use a wavelength band including the Rayleigh scattering for the quantification/identification.

The Rayleigh scattering is characterized in that, due to an influence of diffraction grating, an excitation wavelength is detected in a region near a wavelength band that is a natural number multiple or a reciprocal of a natural number multiple of a detection wavelength, and a width of a region varies depending on a measurement condition, an environment, and the sample for the fluorescence fingerprint. Therefore, for example, it is necessary for an expert to set the width in accordance with the obtained spectrum data to determine a region of Rayleigh scattering.

In addition, since noise components such as Raman scattering and noise during measurement also cause a decrease in quantification/identification performance similarly to Rayleigh scattering, an expert performs advance selection so as to reduce an influence of the noise components on quantification/identification.

In the method disclosed in the present embodiment, calculation of a contribution that quantifies effectiveness for quantification/identification and/or extraction of wavelength bands necessary/unnecessary for quantification/identification are performed based on input spectrum data, and these are used as wavelength selection information. Here, the contribution can take values of three or more levels. Then, the wavelength band used for quantification/identification is automatically selected in advance, and quantification/identification is performed using only the detection intensity corresponding to the selected wavelength band as the independent variable. By automatically performing the pre-selection, it is possible to reduce cost of manual selection by an expert and to provide a highly accurate quantification/identification function.

The wavelength selection information calculation unit 202 receives one or more pieces of spectrum data from the input unit 201 and/or the memory 112. The wavelength selection information calculation unit 202 reads the wavelength selection information calculation model stored in the memory 112, calculates the wavelength selection information based on the received spectrum data, or acquires the wavelength selection information stored in the memory 112.

The wavelength selection information refers to, for each wavelength band constituting the received spectrum data, a contribution that quantifies effectiveness for quantification/identification, and/or a necessary/unnecessary wavelength band in which effectiveness for quantification/identification is represented by a necessary/unnecessary true/false value. The wavelength selection information calculation model for calculating the wavelength selection information may be classified into two types: a contribution calculation model for calculating the contribution based on the input spectrum data and a necessary/unnecessary wavelength band calculation model for calculating the necessary/unnecessary wavelength band. The contribution calculation model and the necessary/unnecessary wavelength band calculation model may be constructed by a method such as machine learning or a manually designed algorithm.

As a method of calculating the contribution based on the spectrum data received from the input unit 201, for example, there is a method of reading from the memory 112 a contribution calculation model obtained by performing supervised learning using a plurality of quantification/identification tasks, and calculating the contribution to quantification/identification for each wavelength band in the spectrum data. The contribution calculation model is a model that receives spectrum data of one or more samples in the same format as an input, calculates all contributions to the quantification/identification for each wavelength band constituting the spectrum data, and outputs total contributions as a tensor in the form of a contribution map that is the same as the spectrum data.

Here, an example of a contribution calculation model using Multi-Layer Perceptron (MLP) will be described. The MLP is a model that performs regression or identification by repeating linear mapping and nonlinear mapping once or more for input data, and constructs a model by optimizing parameters of the linear mapping. First, for one or more pieces of received spectrum data, features such as a mean for each wavelength band in a mathematical formula 1 and a variance for each wavelength band in a mathematical formula 2 are calculated. The features of the plurality of samples enable calculation of a more appropriate contribution. Here, $x^s_n$ is a detection intensity of each of one or more pieces of spectrum data in the same format received by the input unit 201, s is a sample index, S is the number of samples, n is an index of a wavelength band constituting the spectrum data, and N is the number of wavelength bands.

[Math. 1]

$$m_n = \frac{1}{S} \sum_{s=1}^{S} x_n^s \qquad (1)$$

[Math. 2]

$$v_n = \frac{1}{S}\sum_{s=1}^{S}(x_n^s - m_n)^2 \qquad (2)$$

Next, as in a mathematical formula 3, a vector representing a contribution of each wavelength band is calculated using the MLP having the feature as an input. In the mathematical formula 3, $MLP_C()$ represents a function for performing MLP arithmetic processing, taking the above feature as an input and outputting the contribution of each wavelength band to the quantification/identification as an N-dimensional vector, and each element of the output N-dimensional vector represents the contribution of each wavelength band. For example, $c_n$ in the mathematical formula 3 represents the contribution of the wavelength band with the index n. The contribution calculated by the mathematical formula 3 is converted into a tensor and a contribution map is made the same form as the spectrum data, which becomes an output of the contribution calculation model.

[Math. 3]

$$(c_1, c_2, \ldots, c_n, \ldots, c_N)$$
$$= \mathrm{MLP_c}(m_1, m_2, \ldots, m_N, v_1, v_2, \ldots, v_n) \,(3)$$

The $MLP_C$ is a model in which parameters of linear mapping are optimized in advance by supervised learning using a target value of the contribution (target contribution map) as training information. As a method of generating the target contribution map of training information, for example, there is a method in which a training data set and a verification data set including a plurality of sets of spectrum data and quantification/identification training information are prepared, and then the training data set is used to perform linear regression for each wavelength band (each combination of the wavelength bands in a case of multidimensional data) constituting the spectrum data, with only a detection intensity of one wavelength band as the independent variable, and accuracy of the quantification/identification for the verification data set is set as a target contribution map.

In addition, the accuracy of the quantification/identification when a combination of a plurality of wavelength bands is used as the independent variable may be comprehensively calculated, and a mean for each wavelength band may be used as the target contribution map. In order to prevent the contribution from being specific to the verification data set, for a data set including a plurality of sets of spectrum data and quantification/identification training information, a plurality of division patterns for the training data set and the verification data set may be generated, target contribution maps obtained for the patterns may be integrated with statistics such as a mean or a maximum value to create the target contribution map to improve generalization performance.

As a loss function in supervised learning, for example, mean squared error is used in the case of quantification, and cross entropy is used in the case of identification. As an optimization method, for example, a steepest descent method or a stochastic gradient descent method is used. The loss function and the optimization method described above are examples, and other loss functions and optimization methods may be used. The feature may be calculated using statistics such as those in the mathematical formula 1 or the mathematical formula 2, or a machine learning method such as convolutional neural network or transformer, or a manually designed feature such as HOG.

For example, the wavelength selection information calculation unit 202 may input a training data set or the like into the contribution calculation model and store an obtained contribution in the memory 112, and when new spectrum data is input, read out the new spectrum data and use the new spectrum data as the contribution. A mean or a maximum value of the contribution stored in the memory 112 and the contribution obtained by inputting the newly input spectrum data to the contribution calculation model may be obtained, and an integrated result may be used as the contribution.

Next, an example of a method of extracting a necessary/unnecessary wavelength band will be described. As an example of the method of extracting a necessary/unnecessary wavelength band, a rule-based model different from machine learning is used. For example, as a method of extracting a necessary/unnecessary wavelength band for quantification/identification, there is a method using a necessary/unnecessary wavelength band calculation model for automatically extracting a detection wavelength band corresponding to Rayleigh scattering as an unnecessary region for each excitation wavelength band.

In Embodiment 1, the necessary/unnecessary wavelength band calculation model will be described. First, in each excitation wavelength band, among the detection wavelength bands constituting the spectrum data, wavelength bands in which an excitation wavelength is a natural number multiple and a reciprocal of a natural number multiple of the detection wavelength are extracted as center wavelength bands.

In each center wavelength band, a local minimum value of the detection intensity is detected in detection wavelength bands smaller than the center wavelength band, and a detection wavelength band corresponding to the local minimum value and closest to the center wavelength band is set as a left wavelength band. Similarly, a local minimum value of the detection intensity is detected in detection wavelength bands larger than the center wavelength band, and a detection wavelength band corresponding to the local minimum value and closest to the center wavelength band is set as a right wavelength band. In a set of the left wavelength band and the right wavelength band, a region above the left wavelength band and below the right wavelength band is assumed to be Rayleigh scattering, so that unnecessary wavelength bands are automatically extracted.

The above method also applies to a case where an excitation wavelength band corresponding to Rayleigh scattering is automatically extracted as an unnecessary region for each detection wavelength band. The extracted unnecessary wavelength band may be set as an unnecessary wavelength band, a region that is not extracted may be set as a necessary wavelength band. Similarly to the contribution map, all necessary/unnecessary wavelength bands may be made into a necessary/unnecessary wavelength band map, which is a tensor having the same form as the spectrum data.

The method of extracting a necessary/unnecessary wavelength band for quantification/identification is not limited thereto. A method of calculating statistics (mean, variance, covariance, or the like) of detection intensities for each wavelength band and setting a wavelength band equal to or less than a certain threshold or equal to or more than the certain threshold as a necessary or unnecessary wavelength band may be used. In addition, when a range in which the spectrum of interest appears is limited to a certain extent, only a region may be a necessary wavelength band, and the other regions may be unnecessary wavelength bands.

For example, the wavelength selection information calculation unit 202 may input a training data set or the like to the necessary/unnecessary wavelength band calculation model and store an obtained necessary/unnecessary wavelength band in the memory 112, and when new spectrum data is input, read out the new spectrum data and use the new spectrum data as the necessary/unnecessary wavelength band. In addition, a logical sum or a logical product of the necessary/unnecessary wavelength band stored in the memory 112 and the necessary/unnecessary wavelength band obtained by inputting the newly input spectrum to the necessary/unnecessary wavelength band calculation model may be obtained, and an integrated result may be used as the necessary/unnecessary wavelength band.

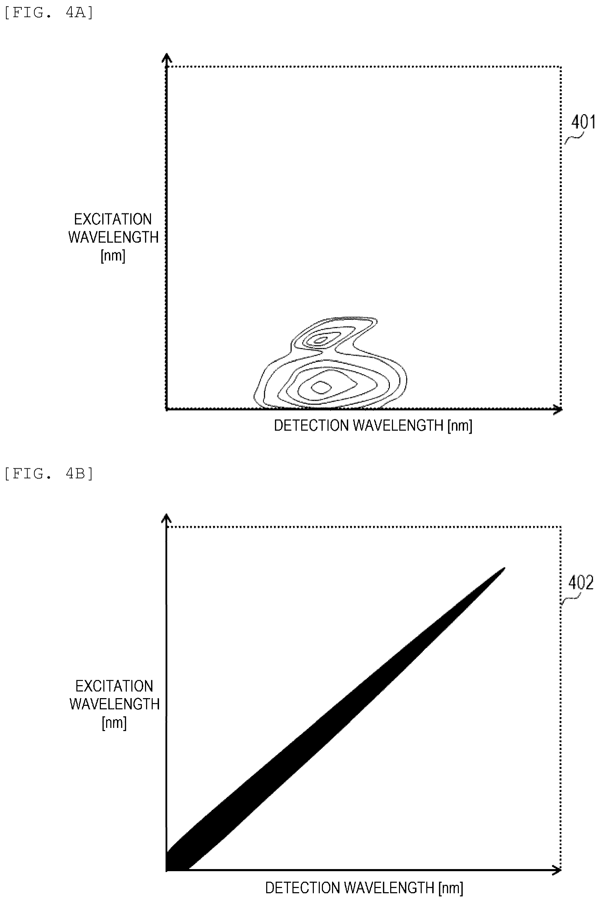

As an example of the wavelength selection information, FIG. 4A illustrates a contribution map visualization example 401, and FIG. 4B illustrates a necessary/unnecessary wavelength band map visualization example 402. Each wavelength selection information corresponds to the fluorescence fingerprint data visualization example 301. The contribution map visualization example 401 visualizes a contribution map representing effectiveness of each wavelength band in quantification/identification of the fluorescence fingerprint data visualization example 301 as contour line data.

In addition to the contour line data, a gray image or a heat map image in which the detection intensity is assigned to a luminance value or color, or a bird's-eye view may be visualized. The necessary/unnecessary wavelength band map visualization example 402 represents whether each wavelength band in the fluorescence fingerprint data visualization example 301 is necessary or unnecessary for quantification/identification as a true/false value, and visualizes the necessary wavelength band in white within a dashed line and the unnecessary wavelength band in black within the dashed line. A color assigned to the true/false value may be any color as long as it is different between true and false.

The wavelength selection information calculation unit 202 outputs information on the contribution and the necessary/unnecessary wavelength band to the automatic wavelength selection unit 203 as wavelength selection information. The wavelength selection information calculation unit 202 may calculate only one of the contribution and the necessary/unnecessary wavelength band and output the result as the wavelength selection information. A result obtained by integrating the information on the contribution and the necessary/unnecessary wavelength band may be output as the wavelength selection information. As an integration method, for example, there is a method in which a false (black in FIG. 4B) wavelength band in the necessary/unnecessary wavelength band is regarded as a contribution 0, and a true (white in FIG. 4B) wavelength band is regarded as a contribution 1, and the contributions are multiplied by a multi-value contribution. The integration enables more appropriate wavelength selection.

The automatic wavelength selection unit 203 automatically selects a wavelength band to be used for quantification/identification based on the wavelength selection information, and outputs a selection result as a wavelength selection result. In an automatic selection method, for example, a wavelength band having a contribution equal to or greater than a fixed threshold may be selected as a wavelength band used for the quantification/identification, or a wavelength band excluding an unnecessary wavelength band or a necessary wavelength band may be selected as a wavelength band used for the quantification/identification. The wavelength selection information and/or the wavelength selection result may be output to the output unit without going through the estimation unit, or may be output to the estimation unit.

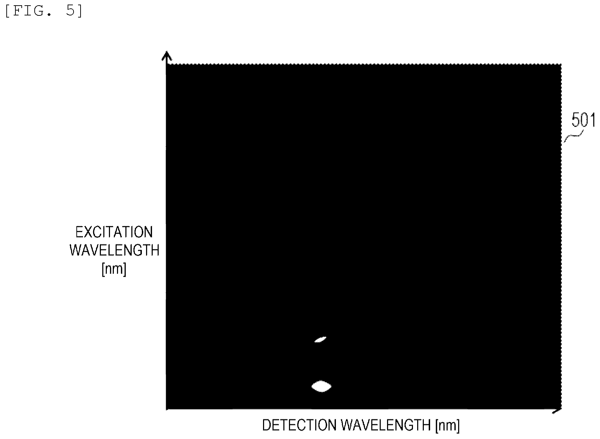

FIG. 5 illustrates a wavelength selection result visualization example 501 as an example of the wavelength selection result. The wavelength selection result visualization example 501 corresponds to the fluorescence fingerprint data visualization example 301, the contribution visualization example 401, and the necessary/unnecessary wavelength band visualization example 402. The wavelength selection result visualization example 501 represents, in each wavelength band in the fluorescence fingerprint data visualization example 301, whether the wavelength band is selected in advance as a wavelength band to be used for the quantification/identification as a true/false value, and visualizes the wavelength band selected in advance in white in a dashed line and the wavelength band not selected in advance in black in the dashed line. A color assigned to the true/false value may be any color as long as it is different between true and false.

In the wavelength selection result visualization example 501, a false (black in FIG. 4B) wavelength band in the necessary/unnecessary wavelength band visualization example 402 and a wavelength band in which the contribution in the contribution visualization example 401 is less than a preset threshold are selected as a wavelength band not used for the quantification/identification, and a wavelength band equal to or greater than the threshold is selected as a wavelength band used for the quantification/identification.

The estimation unit 204 reads any quantification/identification model stored in the memory 112, and performs quantification/identification using the detection intensity corresponding to the wavelength selection result obtained by the automatic wavelength selection unit 203 as the independent variable. In a case of the wavelength selection result visualization example 501, a fluorescence intensity corresponding to the white wavelength band in the dashed line is used as the independent variable. As the quantification/identification model, a linear regression model such as Logistic regression or Lasso regression using the detection intensity as the independent variable may be used, or a machine learning model such as neural network, random forest, or support vector machine may be used.

[Embodiment 2]

In Embodiment 2, a spectrum analysis device is described that enables automatic wavelength selection and highly accurate quantification/identification for a quantification/identification problem uniquely set by a user by adding a function of updating and constructing a wavelength selection information calculation model and a function of constructing a quantification/identification model to the spectrum analysis device described Embodiment 1.

<Hardware Structure of Spectrum Analysis Device>

Since a hardware structure of the spectrum analysis device according to Embodiment 2 is similar as the hardware structure of the spectrum analysis device according to Embodiment 1 illustrated in FIG. 1, the description thereof is omitted.

<Functional Configuration of Spectrum Analysis Device>

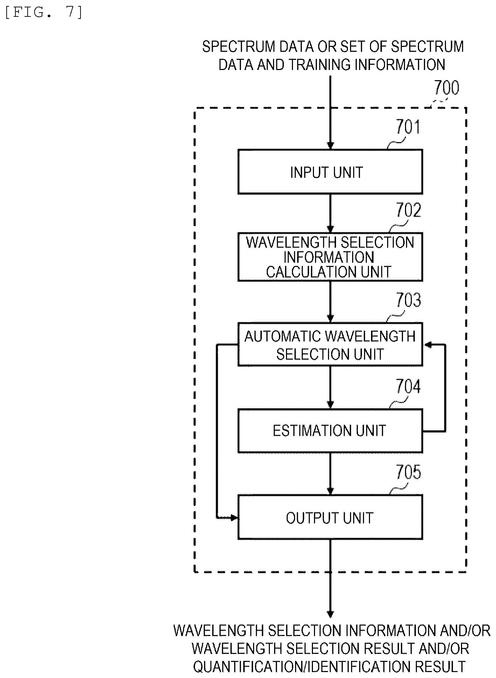

FIG. 7 is an example of a functional block diagram of the spectrum analysis device according to Embodiment 2. A spectrum analysis device 700 includes, as functional units, an input unit 701, a wavelength selection information calculation unit 702, an automatic wavelength selection unit 703, an estimation unit 704, and an output unit 705. Hereinafter, each functional unit will be described.

The input unit 701 receives one or more pieces of spectrum data or one or more sets of spectrum data and training information via the interface 110. The spectrum data or the set of spectrum data and training information received by the input unit 701 is output to the wavelength selection information calculation unit 702, or is output to the wavelength selection information calculation unit 702 while being stored in the memory 112.

The wavelength selection information calculation unit 702 calculates wavelength selection information based on one or more pieces of spectrum data or one or more sets of spectrum data and training information, or acquires wavelength selection information stored in the memory 112. When a set of spectrum data and training information is received, the wavelength selection information calculation model stored in the memory 112 may be read, and the wavelength selection information calculation model may be updated using the set of spectrum data and training information, or a new wavelength selection information calculation model may be constructed and stored in the memory 112. One or more pieces of spectrum data or one or more sets of spectrum data and training information may be directly received as information input from the input unit 701, or may be received via the memory 112, or both may be used.

The automatic wavelength selection unit 703 automatically selects a wavelength band to be used for quantification/identification based on the wavelength selection information or the wavelength selection information and a quantification/identification result output by the estimation unit 704, and outputs a selection result as a wavelength selection result.

Based on the wavelength selection result obtained by the automatic wavelength selection unit 703, the estimation unit 704 constructs a quantification/identification model using one or more sets of spectrum data and training information, or performs quantification/identification on the one or more pieces of spectrum data. The one or more pieces of spectrum data or one or more sets of spectrum data and training information are input from the input unit 701 and are received via the automatic wavelength selection unit 703 or the memory 112. Alternatively, both may be used.

The output unit 705 outputs at least one of the wavelength selection information, the selection result, and the quantification/identification result. In addition, as necessary, information for assisting a user in selecting a wavelength and/or determining a quantification/identification model is output.

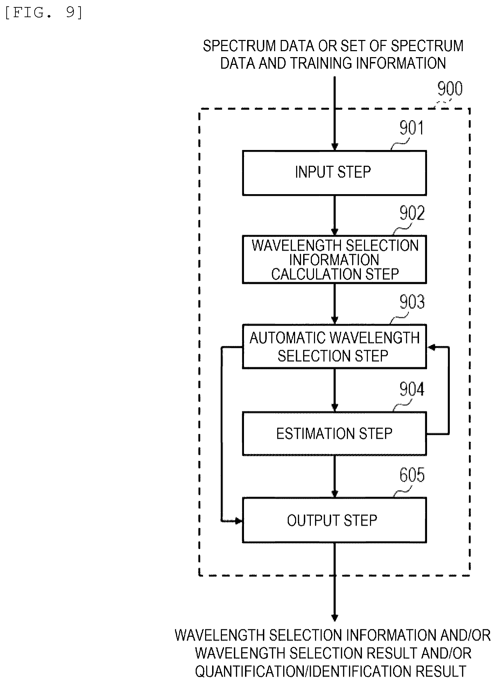

The functions described above do not need to be implemented as in the functional units in FIG. 7 as long as processing that corresponds to an operation of each functional block can be implemented. FIG. 9 illustrates an example of a processing flow diagram according to Embodiment 2. Steps correspond to elements of the functional block diagram illustrated in FIG. 7.

In an input step 901, one or more pieces of spectrum data or one or more sets of spectrum data and training information are received via the interface 110. The spectrum data or the set of spectrum data and training information received in the input step 901 is used in a wavelength selection information calculation step, or is used in the wavelength selection information calculation step while being stored in the memory 112.

In a wavelength selection information calculation step 902, wavelength selection information is calculated based on one or more pieces of spectrum data or one or more sets of spectrum data and training information, or wavelength selection information stored in the memory 112 is acquired. When a set of spectrum data and training information is received, the wavelength selection information calculation model stored in the memory 112 may be read, and the wavelength selection information calculation model may be updated using the set of spectrum data and training information, or a new wavelength selection information calculation model may be constructed and stored in the memory 112.

One or more pieces of spectrum data or one or more sets of spectrum data and training information may be directly received as information input in the input step 901, or may be received via the memory 112, or both may be used.

An automatic wavelength selection step 903 automatically selects a wavelength band to be used for quantification/identification based on the wavelength selection information or the wavelength selection information and a quantification/identification result output by an estimation step 904, and outputs a selection result as a wavelength selection result.

In the estimation step 904, based on the wavelength selection result obtained in the automatic wavelength selection step 903, a quantification/identification model is constructed using one or more sets of spectrum data and training information, or quantification/identification on one or more pieces of spectrum data is performed. The one or more pieces of spectrum data or one or more sets of spectrum data and training information are input from the input step 901 and are received via the automatic wavelength selection step 903 or the memory 112. Alternatively, both may be used.

In an output step 905, the wavelength selection information and/or the selection result and/or the quantification/identification result are output. In addition, as necessary, information for assisting a user in selecting a wavelength and/or determining a quantification/identification model is output.

Hereinafter, a detailed operation will be described with each functional unit as a subject, but each step corresponding to the functional unit may be interpreted as the subject.

<Configuration and Operation of Each Unit>

Hereinafter, operations of the input unit 701, the wavelength selection information calculation unit 702, the automatic wavelength selection unit 703, and the estimation unit 704 among the functional units will be described in detail.

The input unit 701 receives one or more pieces of spectrum data or one or more sets of spectrum data and training information via the interface 110. The spectrum data or the set of spectrum data and training information received by the input unit may be stored in the memory 112 or may be directly output to the wavelength selection information calculation unit 702.

When only one or more pieces of spectrum data are received, the wavelength selection information calculation unit 702 executes similar processing as the wavelength selection information calculation unit 202 described in Embodiment 1. When one or more sets of spectrum data and training information are received, the wavelength selection information calculation model stored in the memory 112 is read, and wavelength selection information is calculated based on the set of spectrum data and training information, or the wavelength selection information calculation model is updated, constructed, and wavelength selection information is calculated. The processing will be described.

As a method of calculating a contribution based on the set of spectrum data and training information, for example, there is a method of creating a contribution calculation model for the spectrum data in advance by performing supervised learning using a plurality of quantification/identification tasks and calculating the contribution based on one or more sets of spectrum data and training information.

In Embodiment 1, the method of calculating the contribution using only one or more pieces of spectrum data is described. However, by estimating the contribution using a set of spectrum data and training information, the contribution to quantification/identification can be more accurately estimated. In Embodiment 2, an example is described in which a contribution is calculated using a constructed contribution calculation model or a contribution calculation model is updated/constructed using newly input spectrum data and training information.

Here, an example of a contribution calculation model using Multi-Layer Perceptron (MLP) will be described. First, a feature is calculated for one or more sets of spectrum data and training information received by the input unit. $MLP_Z$ described in a mathematical formula 4 is an MLP that receives one set of spectrum data and training information as an input and outputs a feature having the same form as the spectrum data. For example, $z^s_n$ represents an n-th element of the feature obtained by inputting the set of spectrum data with a sample index s and training information to MLPz. Here, $y^s$ is training information in which the sample index is s in one or more sets of spectrum data and training information received by the input unit 701. In the mathematical formula 4, the training information $y^s$ is described as a scalar value, but even when the training information is a vector, the feature can be output by designing $MLP_Z$ to receive each element of the vector as an input.

[Math. 4]

$$(z^s_1, z^s_2, \ldots, z^s_n, \ldots, z^s_N)$$
$$= MLP_z(x^s_1, x^z_2, \ldots, x^s_n, \ldots, x^z_N, y^s) \quad (4)$$

Similarly to the mathematical formula 1 and mathematical formula 2 in Embodiment 1, a mean of a mathematical formula 5 and a variance of a mathematical formula 6 are calculated for the feature obtained by the mathematical formula 4 using the mathematical formula 5 and mathematical formula 6.

[Math. 5]

$$m_n = \frac{1}{S} \sum_{s=1}^{S} z^s_n \quad (5)$$

[Math. 6]

$$v_n = \frac{1}{S} \sum_{s=1}^{S} (z^s_n - m_n)^2 \quad (6)$$

Thereafter, the contribution is calculated by inputting results of the mathematical formula 5 and mathematical formula 6 to a model similar to the $MLP_c$ used in Embodiment 1, and a contribution map is output. As in the mathematical formula 4, mathematical formula 5, and mathematical formula 6, by using the feature obtained by integrating the spectrum data and the training information, it is possible to calculate the contribution in consideration of the training information.

The above $MLP_z$ and $MLP_c$ optimize parameters of the linear mapping by supervised learning using the target contribution map as the training information. In the target contribution map, training data and verification data for the spectrum data may be prepared, linear regression may be performed on only one wavelength band for each wavelength band constituting the spectrum data, and the accuracy of the quantification/identification for the spectrum data not used for the linear regression may be used as training information.

Alternatively, the accuracy of the quantification/identification when a combination of a plurality of wavelength bands is used as the independent variable may be comprehensively calculated, and a mean for each wavelength band may be used as the training information. In order to prevent the contribution from being specific to the verification data, a plurality of patterns of the training data and the verification data may be generated for the spectrum data, and target contribution maps obtained for the patterns may be integrated with statistics such as a mean or a maximum value to improve generalization performance.

As the feature, statistics such as those in the mathematical formula 1, mathematical formula 2, mathematical formula 4, and mathematical formula 5 may be used, or a machine learning method such as convolutional neural network, transformer, or neural process, or a manually designed feature such as HOG may be used.

In a case of the method of calculating the contribution based on a set of spectrum data and training information, a contribution calculation model may be constructed by performing supervised learning using quantification/identification training information without using the target contribution map as the training information. For example, instead of outputting the contribution in the mathematical formula 3, parameters of the linear regression using the detection intensity of each wavelength band constituting the spectrum data as the independent variable may be estimated, as in a mathematical formula 7. $MLP_W()$ estimates a weight by which each detection intensity is multiplied and a bias as the parameters of the linear regression. For example, $w_n$ represents a weight of an n-th wavelength band index constituting the spectrum data, and b represents the bias.

[Math. 7]

$$(w_1, w_2, \ldots, w_n, \ldots, w_N, b) = \mathrm{MLP_W}(m_1, m_2, \ldots, m_N, v_1, v_2, \ldots, v_n) \quad (7)$$

A weighted sum of a mathematical formula 8 is calculated for the estimated parameters and the spectrum data, and supervised learning is performed for a calculation result and the quantification/identification training information. $\hat{y}^s$ indicates an estimated value of quantification/identification for the sample index s. A set of the spectrum data used for parameter estimation and the quantification/identification training information and the spectrum data used for calculating the weighted sum may be the same, or different data may be used to improve the generalization performance.

[Math. 8]

$$\hat{y}^s = \frac{1}{N} \sum_{n=1}^{N} w_n x_n^s + b \quad (8)$$

After estimating the parameters using a model for estimating the trained linear regression parameters as described above, the contribution can be calculated by taking an absolute value of the obtained weight as in, for example, a mathematical formula 9. A method of calculating the contribution is not limited thereto. In a case of quantification, a change amount of the weight when positive and negative of a value of the training information are reversed may be used as the contribution, and in a case of two-class identification, a change amount of the weight when an identification value of the training information is reversed in two classes may be used as the contribution. In a case of multi-class identification with three or more classes, the contribution obtained by regarding one class as a positive class and the other classes as a negative class as two-class identification may be calculated when each class is a positive class, and the contribution of multi-class identification may be obtained by averaging contributions.

[Math. 9]

$$c_n = |w_n| \quad (9)$$

The automatic wavelength selection unit 703 reads a wavelength band stored in the memory 112, and automatically selects a wavelength band to be used for the quantification/identification, or automatically selects the wavelength band to be used for the quantification/identification based on wavelength selection information and/or a quantification/identification result obtained by the estimation unit 704, and outputs a selection result as a wavelength selection result. As the automatic selection method, for example, as in Embodiment 1, a wavelength band having a contribution equal to or greater than a fixed threshold may be selected, or a wavelength band excluding an unnecessary wavelength band or a necessary wavelength band may be selected. The threshold is a hyperparameter that affects the quantification/identification accuracy.

The threshold for the wavelength selection information may be automatically determined by linking with construction of a quantification/identification model and a quantification/identification result in the estimation unit 704 to be described later. This threshold automatic determination method will be described after a detailed description of the estimation unit 704. The wavelength selection information and/or the wavelength selection result may be output to the output unit without going through the estimation unit, or may be output to the estimation unit.

The estimation unit 704 constructs a quantification/identification model using a detection intensity corresponding to the wavelength selection result obtained by the automatic wavelength selection unit 703 as the independent variable and the training information as a dependent variable and stores the quantification/identification model in the memory 112, or reads the quantification/identification model stored in the memory 112 and performs quantification/identification of the spectrum data. A quantification/identification result may be output to the automatic wavelength selection unit 703. As the quantification/identification model, a linear regression model such as Logistic regression or Lasso regression using the detection intensity as the independent variable may be used, or a machine learning model such as neural network, random forest, or support vector machine may be used.

A method of preliminary wavelength selection in the automatic wavelength selection unit 703 based on the wavelength selection information and/or the quantification/identification result obtained by the estimation unit 704 will be described. As an example, there is a method of automatically determining a threshold of the contribution depending on the quantification/identification accuracy. First, a set of spectrum data and training information received by the input unit 701 is divided into training data and verification data, and wavelength selection information is calculated by the wavelength selection information calculation unit 702 using the training data.

In Embodiment 1, with respect to the obtained wavelength selection information, a quantification/identification model is constructed using the training data in which any initial value is set as a threshold and a detection intensity corresponding to a wavelength band having a contribution equal to or greater than the threshold is set as the independent variable. For the obtained quantification/identification model, the quantification/identification accuracy is calculated using the verification data.

For example, target accuracy is set in advance, and if the calculated quantification/identification accuracy is less than the target accuracy, the threshold is lowered to increase the number of independent variables (wavelength bands) used for the quantification/identification, thereby improving the accuracy. If the calculated quantification/identification accuracy is equal to or greater than the target accuracy, the quantification/identification model is reconstructed in which the number of independent variables (wavelength bands) used for the quantification/identification is reduced while achieving the target accuracy by increasing the threshold.

By repeating adjustment of the threshold for the wavelength selection information and the construction of the quantification/identification model in this manner, it is possible to automatically select a wavelength band that is equal to or greater than the target accuracy and has the fewest number of wavelength bands used for the quantification/identification. In addition, a method may be used in which a maximum number of wavelength bands used for the quantification/identification is set in advance, and by repeating the adjustment of the threshold and the construction of the quantification/identification model in the same manner as described above, the wavelength band that is equal to or less than the maximum number of wavelength bands and has the highest quantification/identification accuracy is automatically selected.

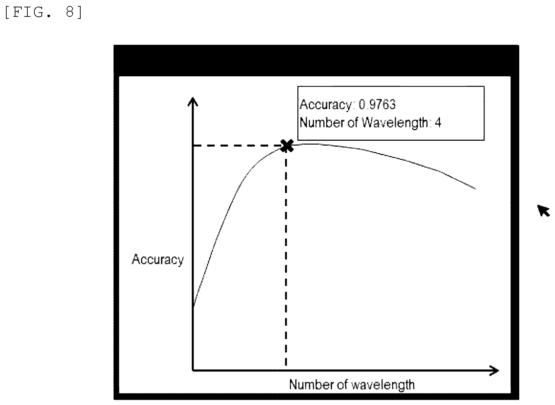

In contrast to the method of automatically determining the threshold of the contribution based on a relationship between the threshold and the quantification/identification accuracy, instead of automatically determining the threshold, a relationship between the quantification/identification accuracy and the number of wavelength bands selected in advance may be presented to a user using the output unit 705. An example in FIG. 8 is a graph representing the relationship between the quantification/identification accuracy and the number of wavelength bands selected in advance, and it is assumed that the user selects one quantification/identification model from the graph using a mouse or the like via the interface 110.

The quantification/identification accuracy in the selected quantification/identification model and the number of wavelength bands selected in advance are displayed in "Accuracy" and "Number of Wavelength". Accordingly, the user can select the quantification/identification model in consideration of the required quantification/identification accuracy and the number of wavelength bands selected in advance.

The output unit 705 outputs at least one of the wavelength selection information, the selection result, and the quantification/identification result. In addition, as necessary, information for assisting a user in selecting a wavelength and/or determining a quantification/identification model is output.

In a case of quantification, in addition to an estimated quantification result for each sample, an evaluation value of a quantification model such as a determination coefficient or a root mean squared error (RMSE) may be output, or graph data such as a calibration curve may be output. In a case of identification, in addition to an estimated identification result for each sample, an evaluation value of an identification model such as an identification rate, a precision rate, or a recall rate may be output. These outputs are displayed on the display device 122 via the interface 110.

[Embodiment 3]

In Embodiment 3, a spectrum analysis system will be described in which a wavelength band effective for quantification/identification of spectrum data is selected in advance using the spectrum analysis device 700 described in Embodiment 2, thereby achieving highly accurate quantification/identification while shortening an analysis time. The spectrum analysis system according to Embodiment 3 has two phases: a training phase in which a wavelength band to be selected in advance is determined using a training data set given by a user and a quantification/identification model is constructed; and an estimation phase in which only a detection intensity of a wavelength band corresponding to a wavelength selection result is measured for an evaluation sample and a quantification/identification model constructed in the training phase is used to perform quantification/identification. Hereinafter, a hardware structure will be described, and then details will be described separately for each phase.

<Hardware Structure of Spectrum Analysis System>

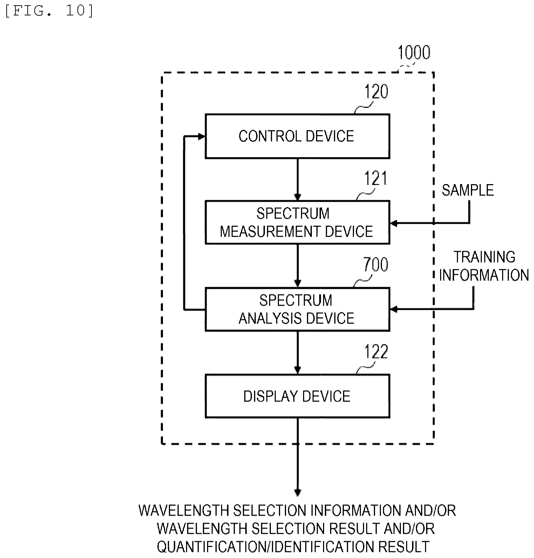

FIG. 10 shows a hardware structure according to Embodiment 3. A spectrum analysis system 1000 according to Embodiment 3 includes the control device 120, the spectrum measurement device 121, the spectrum analysis device 700, and the display device 122.

The control device 120 sets a wavelength band of an excitation light with which the sample is irradiated and/or a detection wavelength band of a light reflected, transmitted, absorbed, and emitted by the sample in the spectrum measurement device 121 to be described later.

The spectrum measurement device 121 measures a spectrum corresponding to a wavelength set by the control device 120 for a training sample and an evaluation sample, and inputs discretized spectrum data to the spectrum analysis device 700.

The spectrum analysis device 700 is the spectrum analysis device described in Embodiment 2, and in the training phase, constructs a training data set based on a set of spectrum data of the training sample output by the spectrum measurement device 121 and training information input from a user, and uses the training data set to select in advance a wavelength band used for quantification/identification, and to construct a quantification/identification model in which and a detection intensity corresponding to a wavelength selection result is used as an independent variable. In an evaluation phase, quantification/identification is performed using the wavelength selection result of the wavelength band used for the quantification/identification and the quantification/identification model calculated and constructed in the training phase, with the spectrum data (evaluation data) of the evaluation sample output by the spectrum measurement device 121 as an input.

The display device 122 presents wavelength selection information and/or the wavelength selection result and/or a quantification/identification result output by the spectrum analysis device 700 to the user.

An operation of each device is different between the training phase and the estimation phase. Therefore, the operation of each device will be described separately for the training phase and the estimation phase.

<Operation of Device (Training Phase)>

The control device 120 sets a wavelength band of an excitation light with which the training sample is irradiated and/or a detection wavelength band of a light reflected, transmitted, absorbed, and emitted by the sample in the spectrum analysis device 700. In the training phase, the entire wavelength band that can be a candidate for the wavelength band used for the quantification/identification is set as a measurement wavelength band.

The spectrum measurement device 121 measures a spectrum of a training sample for acquiring training data, acquires discretized spectrum data, and inputs the data to the spectrum analysis device 700.

The spectrum analysis device 700 receives the spectrum data of the training sample measured by the spectrum measurement device 121 and training information for the spectrum data, calculates wavelength selection information by the method described in Embodiment 2, selects in advance a wavelength band to be used for quantification/identification, and constructs a quantification/identification model in which a detection intensity corresponding to a wavelength selection result is used as the independent variable. The wavelength selection result is transmitted to the control device 120 and set as the measurement wavelength band in the estimation phase.

The display device 122 displays quantification/identification accuracy for the training data set output by the spectrum analysis device 700, the wavelength selection information as illustrated in FIG. 4, the wavelength selection result as illustrated in FIG. 5, and information for assisting the user in selecting a wavelength and/or determining a quantification/identification model as illustrated in FIG. 8.

<Operation of Device (Evaluation Phase)>

The control device 120 sets a wavelength selection result output by the spectrum analysis device 700 in the training phase as the wavelength band of the excitation light with which the evaluation sample is irradiated and a wavelength band of a reflected light, transmitted light, absorbed light, or the like detected from the sample.

The spectrum measurement device 121 measures a spectrum corresponding to a wavelength set by the control device 120 for the evaluation sample, acquires discrete spectrum data in the same manner as in the training phase, and inputs the data to the spectrum analysis device 700.

The spectrum analysis device 700 receives the spectrum data of the evaluation sample measured by the spectrum measurement device 121, and performs quantification/identification by the method described in Embodiment 1 using the quantification/identification model constructed in the training phase.

The display device 122 presents a quantification/identification result of the evaluation sample output by the spectrum analysis device 700 to the user. In addition, the acquired spectrum may be visualized and displayed as necessary.

<Modification>

A method of calculating the wavelength selection information in Embodiments 1 and 2 and a method of constructing the quantification/identification model in Embodiment 2 are described. However, spectrum data used for calculation of the wavelength selection information or used for construction of the quantification/identification model may be augmented using any data augmentation method for a training data set provided by a user. Examples of the data augmentation method include addition of random noise, weighted linear sum of a plurality of pieces of spectrum data, and variation in range.

The automatic wavelength selection unit 203 (703) may select in advance a wavelength band limited to a specific type of wavelength band, based on the wavelength selection information. For example, in the discretized fluorescence fingerprint data 300, the wavelength band may be selected in advance limited to the excitation wavelength, or the wavelength band may be selected limited to the detection wavelength. In Embodiments 1 and 2, it is described that the calculation of the contribution and the calculation of the necessary/unnecessary wavelength band are performed in parallel, but one of the processes may be executed first and the other may be executed thereafter. For example, the contribution may be calculated by calculating the necessary/unnecessary wavelength band and inputting the spectrum data after excluding the unnecessary wavelength band from the spectrum data.

In Embodiment 3, a method of using the spectrum data measured by the spectrum measurement device 121 as the training data set is described, but the spectrum data prepared in advance may be stored in the memory 112 and used as a part of the training data. In addition, evaluation data may be stored in the memory 112 in advance, accuracy of a model newly constructed in the training phase may be compared with accuracy of a model stored in the memory 112 for the evaluation data, or the number of wavelength bands selected in advance and accuracy, and a model with high accuracy or a model with high accuracy and a small number of wavelength bands selected in advance may be determined by some index and stored in the memory 112.

In the embodiments, the spectrum analysis device 100 (700) may store an input signal, an output signal, a model, and the like of each functional unit of the spectrum analysis device 100 (700) in an external device. For example, spectrum information, the training information, the wavelength selection information, the wavelength selection result, the quantification/identification result, the quantification/identification model, the wavelength selection information calculation model, and the like stored in the memory 112 may be stored in a network attached storage (NAS), a cloud storage, or the like via the interface 110, or the interface 110 may receive the above-described signal or model stored in the NAS or the cloud storage and store the signal or model in the memory 112.

In the embodiments, after receiving the discretized spectrum data, the input unit 201 (701) may change resolution by performing enlargement or reduction processing using nearest neighbor interpolation or linear interpolation. For example, in Embodiment 3, after the quantification/identification model is constructed using the discretized fluorescence fingerprint data 300 measured at intervals of 1 nm as the training data set, when it is necessary to perform quantification/identification on evaluation data measured at intervals of 5 nm, the input unit 201 may apply the quantification/identification model generated using the training data set by performing enlargement processing on the discretized fluorescence fingerprint data 300 as the evaluation data so that a height (the number of excitation wavelength bands) and a width (the number of detection wavelength bands) are five times greater. The same applies to a case of performing reduction processing.

In the embodiments, a contribution map or the necessary/unnecessary wavelength band map may be subjected to enlargement or reduction processing by the nearest neighbor interpolation or the linear interpolation to change the resolution different from that of the spectrum data used for calculating the contribution map or the necessary/unnecessary wavelength band map. For example, in Embodiment 3, after the contribution map is calculated using the discretized fluorescence fingerprint data 300 measured at intervals of 1 nm, the reduction processing is performed to reduce the height (the number of excitation wavelength bands) and the width (the number of detection wavelength bands) to 1/5 so as to obtain a contribution map corresponding to the discretized fluorescence fingerprint data measured at intervals of 5 nm, and the wavelength band can be selected in advance for the data measured at intervals of 5 nm.

The invention is not limited to the embodiments described above, and includes various modifications. For example, the embodiment described above has been described in detail to facilitate understanding of the invention, and the invention is not necessarily limited to those including all configurations described above. A part of a configuration of a certain embodiment can be replaced with a configuration of another embodiment, and a configuration of another embodiment can be added to a configuration of a certain embodiment. It is possible to add, delete, or replace a part of configurations of each embodiment with other configurations.

A part or all of configurations, functions, processing units, and the like described above may be implemented by hardware by, for example, designing with an integrated circuit. The above configurations, functions, and the like may be implemented by software by a processor interpreting and executing a program for implementing each function. Information such as a program, a table, and a file for implementing each function can be stored in a recording device such as a memory, a hard disk, or a solid state drive (SSD), or in a recording medium such as an IC card or an SD card.

Further, control lines and information lines are those considered to be necessary for description, and not all control lines and information lines are necessarily illustrated in the product. Actually, it may be considered that almost all the configurations are connected to one another.

**Claims**

1. A spectrum analysis device for quantifying/identifying a characteristic of a sample based on spectrum data of the sample at one or a plurality of excitation wavelengths, the spectrum analysis device comprising:

   an arithmetic device; and
   a memory configured to store a program to be executed by the arithmetic device, wherein
   the arithmetic device

   acquires wavelength selection information that indicates a contribution to quantification/identification and/or necessary/unnecessary for each wavelength band of the spectrum data,
   receives the spectrum data obtained from the sample as an input,
   selects a wavelength band used for quantifying/identifying the characteristic of the sample from the wavelength band of the spectrum data based on the wavelength selection information, and
   performs quantification/identification of the characteristic of the sample based on a detection intensity corresponding to a selection result of the wavelength band, and outputs a result.

2. The spectrum analysis device according to claim 1, wherein
   the arithmetic device outputs at least one of the wavelength selection information and the selection result of the wavelength band.

3. The spectrum analysis device according to claim 1, wherein
   the arithmetic device calculates a contribution for each wavelength of the spectrum data required for the quantification/identification based on one or more pieces of received spectrum data, and generates the wavelength selection information based on the calculated contribution.

4. The spectrum analysis device according to claim 1, wherein
   the arithmetic device specifies a region in the spectrum data including a noise component, and includes the specified region in the wavelength selection information as a region unnecessary for the quantification/identification.

5. The spectrum analysis device according to claim 1, wherein
   the arithmetic device uses, as training information of the contribution, quantification/identification accuracy when the quantification/identification is performed for each wavelength band of the spectrum data with a detection intensity of a wavelength band as an independent variable, and constructs a model for calculating the wavelength selection information by a plurality of sets of the spectrum data and corresponding training information of the contribution.

6. The spectrum analysis device according to claim 1, wherein
   the arithmetic device constructs a model for calculating the wavelength selection information by a plurality of sets of the spectrum data and corresponding quantification/identification training information.

7. The spectrum analysis device according to claim 6, wherein
   the arithmetic device determines, when a hyperparameter affecting quantification/identification accuracy is changed, a value of the hyperparameter based on a relationship between a wavelength selection result and the quantification/identification accuracy, or presents information on the relationship to a user to assist the user in determining a value of the hyperparameter.

8. A spectrum analysis system comprising:

   a control device configured to set a wavelength band of an excitation light with which a sample is irradiated and a wavelength band of a detection light;
   a spectrum measurement device configured to measure, for the sample, spectrum data corresponding to a wavelength band set by the control device; and
   the spectrum analysis device according to claim 1, wherein
   the control device controls the spectrum measurement device to measure a light in a wavelength band corresponding to a result of wavelength selection obtained by the spectrum analysis device.

9. The spectrum analysis system according to claim 8, further comprising:

a display device, wherein
the spectrum measurement device transmits the spectrum data to the spectrum analysis device, and
the display device receives an analysis result of the spectrum analysis device and displays the analysis result.

10. A spectrum analysis method in which a device quantifies/identifies a characteristic of a sample based on spectrum data of the sample at one or a plurality of excitation wavelengths, the spectrum analysis method comprising:

acquiring, by the device, wavelength selection information that indicates a contribution to quantification/identification and/or necessary/unnecessary for each wavelength band of the spectrum data;
receiving, by the device, the spectrum data obtained from the sample as an input;
selecting, by the device, a wavelength band used for quantifying/identifying the characteristic of the sample from the wavelength band of the spectrum data based on the wavelength selection information; and
performing, by the device, quantification/identification of the characteristic of the sample based on a detection intensity corresponding to a selection result of the wavelength band, and outputting, by the device, a result.

11. The spectrum analysis method according to claim 10, further comprising:
calculating, by the device, a contribution for each wavelength of the spectrum data required for the quantification/identification based on one or more pieces of received spectrum data, and generating, by the device, the wavelength selection information based on the calculated contribution.

12. The spectrum analysis method according to claim 10, further comprising:
specifying, by the device, a region in the spectrum data including a noise component, and including, by the device, the specified region in the wavelength selection information as a region unnecessary for the quantification/identification.

13. The spectrum analysis method according to claim 10, further comprising:
using, as training information of the contribution and by the device, quantification/identification accuracy when the quantification/identification is performed for each wavelength band of the spectrum data with a detection intensity of a wavelength band as an independent variable, and constructing, by the device, a model for calculating the wavelength selection information by a plurality of sets of the spectrum data and corresponding training information of the contribution.

14. The spectrum analysis method according to claim 10, further comprising:
constructing, by the device, a model for calculating the wavelength selection information by a plurality of sets of the spectrum data and corresponding quantification/identification training information.

15. The spectrum analysis method according to claim 14, further comprising:
determining, by the device, when a hyperparameter affecting quantification/identification accuracy is changed, a value of the hyperparameter based on a relationship between a wavelength selection result and the quantification/identification accuracy, or presenting, by the device, information on the relationship to a user to assist the user in determining a value of the hyperparameter.

[FIG. 1]

[FIG. 2]

SPECTRUM DATA

100

201
INPUT UNIT

202
WAVELENGTH SELECTION
INFORMATION
CALCULATION UNIT

203
AUTOMATIC WAVELENGTH
SELECTION UNIT

204
ESTIMATION UNIT

205
OUTPUT UNIT

WAVELENGTH SELECTION INFORMATION AND/OR
WAVELENGTH SELECTION RESULT AND/OR
QUANTIFICATION/IDENTIFICATION RESULT

[FIG. 3A]

300

| | | DETECTION WAVELENGTH [nm] | | | | |
|---|---|---|---|---|---|---|
| | | 200 | 205 | ... | 695 | 700 |
| EXCITATION WAVELENGTH [nm] | 200 | 106.41 | 105.22 | | 5.21 | 4.3 |
| | 205 | 104.88 | 105.91 | | 5.88 | 4.81 |
| | ⋮ | | | | | |
| | 695 | 0.11 | 0.15 | | 105.85 | 107.23 |
| | 700 | 0.09 | 0.10 | | 106.54 | 109.87 |

[FIG. 3B]

[FIG. 4A]

EXCITATION WAVELENGTH [nm]

DETECTION WAVELENGTH [nm]

401

[FIG. 4B]

EXCITATION WAVELENGTH [nm]

DETECTION WAVELENGTH [nm]

402

[FIG. 5]

[FIG. 6]

SPECTRUM DATA

↓

600

601

INPUT STEP

↓

602

WAVELENGTH SELECTION
INFORMATION
CALCULATION STEP

↓

603

AUTOMATIC WAVELENGTH
SELECTION STEP

↓

604

ESTIMATION STEP

↓

605

OUTPUT STEP

↓

WAVELENGTH SELECTION INFORMATION AND/OR
WAVELENGTH SELECTION RESULT AND/OR
QUANTIFICATION/IDENTIFICATION RESULT

[FIG. 7]

SPECTRUM DATA OR SET OF SPECTRUM
DATA AND TRAINING INFORMATION

700

701

| INPUT UNIT |

702

| WAVELENGTH SELECTION
INFORMATION
CALCULATION UNIT |

703

| AUTOMATIC WAVELENGTH
SELECTION UNIT |

704

| ESTIMATION UNIT |

705

| OUTPUT UNIT |

WAVELENGTH SELECTION INFORMATION AND/OR
WAVELENGTH SELECTION RESULT AND/OR
QUANTIFICATION/IDENTIFICATION RESULT

[FIG. 8]

[FIG. 9]

SPECTRUM DATA OR SET OF SPECTRUM
DATA AND TRAINING INFORMATION

900

901

INPUT STEP

902

WAVELENGTH SELECTION
INFORMATION
CALCULATION STEP

903

AUTOMATIC WAVELENGTH
SELECTION STEP

904

ESTIMATION STEP

605

OUTPUT STEP

WAVELENGTH SELECTION INFORMATION AND/OR
WAVELENGTH SELECTION RESULT AND/OR
QUANTIFICATION/IDENTIFICATION RESULT

[FIG. 10]

1000

120

CONTROL DEVICE

121

SPECTRUM
MEASUREMENT DEVICE

SAMPLE

700

SPECTRUM
ANALYSIS DEVICE

TRAINING
INFORMATION

122

DISPLAY DEVICE

WAVELENGTH SELECTION INFORMATION AND/OR
WAVELENGTH SELECTION RESULT AND/OR
QUANTIFICATION/IDENTIFICATION RESULT

## INTERNATIONAL SEARCH REPORT

| | International application No. |
|---|---|
| | **PCT/JP2024/006818** |

### A. CLASSIFICATION OF SUBJECT MATTER

*G01N 21/64*(2006.01)i; *G01J 3/443*(2006.01)i
FI:   G01N21/64 Z; G01J3/443

According to International Patent Classification (IPC) or to both national classification and IPC

### B. FIELDS SEARCHED

Minimum documentation searched (classification system followed by classification symbols)

G01N21/00-21/958; G01J3/00-3/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-92502 A (CANON MEDICAL SYSTEMS CORP.) 22 June 2022 (2022-06-22) paragraphs [0038]-[0045], fig. 5-7, claim 1 | 1-15 |
| Y | JP 2019-174328 A (CKD CORPORATION) 10 October 2019 (2019-10-10) paragraphs [0117]-[0121] | 1-15 |
| Y | WO 2022/080367 A1 (NIPPON SHOKUBAI CO., LTD.) 21 April 2022 (2022-04-21) paragraphs [0031]-[0032] | 1-15 |
| A | JP 2018-40779 A (HITACHI HIGH-TECH SCIENCE CORP.) 15 March 2018 (2018-03-15) entire text, all drawings | 1-15 |
| A | JP 2009-31176 A (HITACHI HIGH-TECHNOLOGIES CORPORATION) 12 February 2009 (2009-02-12) entire text, all drawings | 1-15 |
| A | JP 2014-10057 A (BRIDGESTONE CORPORATION) 20 January 2014 (2014-01-20) claim 3 | 1-15 |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/006818**

### C.    DOCUMENTS CONSIDERED TO BE RELEVANT

| Category* | Citation of document, with indication, where appropriate, of the relevant passages | Relevant to claim No. |
|---|---|---|
| A | JP 2018-13418 A (YANMAR CO., LTD.) 25 January 2018 (2018-01-25) entire text, all drawings | 1-15 |
| A | JP 2015-180895 A (NATIONAL AGRICULTURE & FOOD RESEARCH ORGANIZATION) 15 October 2015 (2015-10-15) entire text, all drawings | 1-15 |

Form PCT/ISA/210 (second sheet) (July 2022)

EP 4 692 766 A1

## INTERNATIONAL SEARCH REPORT
### Information on patent family members

International application No.

**PCT/JP2024/006818**

| Patent document cited in search report | | | Publication date (day/month/year) | Patent family member(s) | | | Publication date (day/month/year) |
|---|---|---|---|---|---|---|---|
| JP | 2022-92502 | A | 22 June 2022 | (Family: none) | | | |
| JP | 2019-174328 | A | 10 October 2019 | US | 2020/0400557 | A1 | |
| | | | | paragraphs [0132]-[0136] | | | |
| | | | | WO | 2019/187253 | A1 | |
| | | | | EP | 3779413 | A1 | |
| | | | | CN | 111902713 | A | |
| WO | 2022/080367 | A1 | 21 April 2022 | US | 2023/0375472 | A1 | |
| | | | | paragraphs [0048]-[0055] | | | |
| | | | | EP | 4231000 | A1 | |
| | | | | CN | 116368370 | A | |
| | | | | KR | 10-2023-0086762 | A | |
| JP | 2018-40779 | A | 15 March 2018 | US | 2018/0067048 | A1 | |
| | | | | EP | 3290908 | A1 | |
| JP | 2009-31176 | A | 12 February 2009 | (Family: none) | | | |
| JP | 2014-10057 | A | 20 January 2014 | (Family: none) | | | |
| JP | 2018-13418 | A | 25 January 2018 | (Family: none) | | | |
| JP | 2015-180895 | A | 15 October 2015 | (Family: none) | | | |

Form PCT/ISA/210 (patent family annex) (July 2022)

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023055642 A
- JP 2018013418 A
- JP 2015180895 A